(19) Europäisches Patentamt
European Patent Office
Office européen des brevets

(11) **EP 4 193 120 B1**

(12) **EUROPEAN PATENT SPECIFICATION**

(45) Date of publication and mention
of the grant of the patent:
**24.04.2024 Bulletin 2024/17**

(21) Application number: **21743531.2**

(22) Date of filing: **22.07.2021**

(51) International Patent Classification (IPC):
**G01B 9/02** *(2022.01)*　　**H04L 27/22** *(2006.01)*

(52) Cooperative Patent Classification (CPC):
**G01B 9/02083**

(86) International application number:
**PCT/EP2021/070501**

(87) International publication number:
**WO 2022/028904 (10.02.2022 Gazette 2022/06)**

(54) **DISTORTION-CORRECTED PHASE GENERATED CARRIER DEMODULATION METHOD USING MULTITONE MIXING**

VERZERRUNGSKORRIGIERTES PHASENGENERIERTES TRÄGERDEMODULATIONSVERFAHREN UNTER VERWENDUNG VON MEHRTONMISCHUNG

PROCÉDÉ DE DÉMODULATION DE PORTEUSE GÉNÉRÉE EN PHASE À CORRECTION DE DISTORSION UTILISANT UN MÉLANGE MULTITONALITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2020 IT 202000019267**

(43) Date of publication of application:
**14.06.2023 Bulletin 2023/24**

(73) Proprietor: **Scuola Superiore Sant'Anna
56127 Pisa (IT)**

(72) Inventors:
• **MARIN, Yisbel**
**56127 Pisa (VE)**
• **VELHA, Philippe**
**56127 Pisa (FR)**
• **OTON, Claudio J.**
**56127 Pisa (ES)**

(74) Representative: **Perronace, Andrea et al
Jacobacci & Partners S.p.A.
Via Tomacelli, 146
00186 Roma (IT)**

(56) References cited:
**US-A1- 2019 368 860**

• **LI SHUWANG ET AL: "An ameliorated phase-generated-carrier demodulation algorithm for sinusoidal phase-modulating fiber-optic interferometer", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10849, 12 December 2018 (2018-12-12), pages 108490A-108490A, XP060114066, DOI: 10.1117/12.2503786 ISBN: 978-1-5106-2099-5**
• **YU ZHIHUA ET AL: "High stability and low harmonic distortion PGC demodulation technique for interferometric optical fiber sensors", OPTICS AND LASER TECHNOLOGY, ELSEVIER SCIENCE PUBLISHERS BV., AMSTERDAM, NL, vol. 109, 1 August 2018 (2018-08-01), pages 8-13, XP085475515, ISSN: 0030-3992, DOI: 10.1016/J.OPTLASTEC.2018.07.055**
• **QIAN XINLEI ET AL: "Modified phase-generated carrier demodulation compensated for the propagation delay of the fiber", OPTICS COMMUNICATIONS, ELSEVIER, AMSTERDAM, NL, vol. 457, 20 September 2019 (2019-09-20), XP085907963, ISSN: 0030-4018, DOI: 10.1016/J.OPTCOM.2019.124595 [retrieved on 2019-09-20]**

EP 4 193 120 B1

## Description

The present invention relates to a distortion-corrected Phase Generated Carrier Demodulation Method using Multitone Mixing.

## Background art

Optical interferometry is currently the most accurate technique to measure certain physical magnitudes such as displacement, vibrations, wavelength, among others. Interferometers can detect the phase difference between two optical branches, and from this information one can measure remarkably small displacements or wavelength variations.

In a homodyne interferometer, when the two optical beams with the same frequency recombine after following different paths, the resulting signal is modulated by the cosine of their phase difference, which can be used to extract the phase change. However, the problem is that the slope of the cosine function, which determines the responsivity, varies periodically with the phase itself, generating so-called responsivity fading. The point of maximum slope is known as the quadrature point, and it is not straightforward to keep the interferometer always in quadrature. Many techniques exist for solving this problem, such as the use of 3x3 beam couplers at the output [1] which generates three signals dephased by 120°, allowing the univocal extraction of the phase with no responsivity fading, but this technique requires monitoring three signal ports per sensing point, and requires a previous calibration. Other techniques apply active modulation of the interferometer, either to keep it in quadrature with a feedback loop [2] or dithering it constantly and applying phase demodulation techniques such as pseudo-heterodyne [3], serrodyne modulation with quadrature sampling [4] or phase generated carrier (PGC) modulation [5]. The latter method is the most popular, and consists in introducing a sinusoidal modulation in the interferometer, and extracting the cosine (in-phase, $I$) and the sine (quadrature, $Q$) components from the different harmonics (most typically the first and the second) of the extracted signals. Once the $I$ and the $Q$ are known, the phase can be calculated either by applying an arc-tangent function [6] or a cross-difference multiplication algorithm (CDM) [5].

The cross-difference multiplication method has the main disadvantage that it only calculates the derivative of the signal, which makes it more sensitive to low-frequency noise, and prevents the calculation of the absolute phase value. Furthermore, even though it is less prone to distortion than the arc-tangent method, it is sensitive to light intensity fluctuations. In contrast, the arc-tangent method allows the calculation of the absolute phase and is intrinsically robust to light intensity fluctuations [6]. The main disadvantage of the arc-tan methods is the distortion generated when the modulation depth deviates from the nominal one, which deforms the IQ circumference into an ellipse. Renormalizing the ellipse back into a circumference is possible, but in real systems the modulation depth can drift, and in these cases, it is not straightforward to track and update the correction algorithms.

Many different works have been published to correct distortion in PGC algorithms. Some methods use correction factors which are used to renormalize the $I$ and $Q$ signals [7] [8] [9] [10]. However, these methods have the drawback of having situations in which a division by zero may occur, which strongly increases noise; in addition, they often require a phase variation in time to be effective. Other methods monitor higher harmonics of the signal, $3f$ [11] [12] [13] and sometimes up to $4f$ [14] [15], but these methods also generate divisions by zero when the phase is close to certain values, which generates noise. Other techniques use ellipse-fitting algorithms to characterize the deviation from the nominal modulation depth [16] [17] but they require a calibration process every time the modulation depth changes, or require a reference interferometer. They also require a variation of the signal along a certain range for the calibration to take place. In [18], a sophisticated *arc tan*-based method is presented, which is robust to modulation depth, light intensity noise and phase delay variations.

However, this method requires a complex signal analysis using 8 different mixers for every signal to demodulate. In "An ameliorated phase-generated-carrier demodulation algorithm for sinusoidal phase-modulating fiber-optic interferometer" by LI SHUWANG ET AL a method for demodulating a waveform I outputting from an interferometer with two branches according to the state of the art is disclosed.

## Object and subject-matter of the invention

The object of the present invention is to provide a demodulation method for optical interferometry which at least in part solves the problems and overcomes the disadvantages of the prior art.

The subject-matter of the present invention is a method and a corresponding program and interferometric system according to the attached claims.

**Detailed description of examples of embodiment of the invention**

**List of figures**

The invention will now be described for illustrative but not limitative purposes, with particular reference to the drawings of the attached figures, in which:

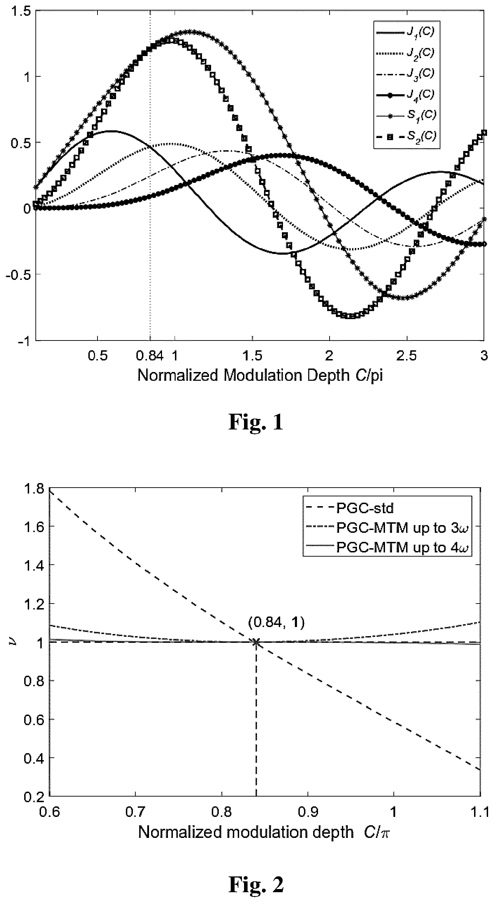

- Fig. 1 shows first four Bessel functions of the first kind and coefficients $S_1$ and $S_2$ versus the normalized modulation depth $C/\pi$ for the case without $4\omega$, and the nominal modulation depth $C = 0.84\pi$. $J_1$ and $J_2$ have the same the value but not the same slope, while $S_1$ and $S_2$ have the same value and slope;
- Fig. 2 shows a plot of $\upsilon$ versus the normalized modulation depth $C/\pi$ for standard PGC (PGC-std), PGC-MTM up to $3\omega$ and PGC-MTM up to $4\omega$;

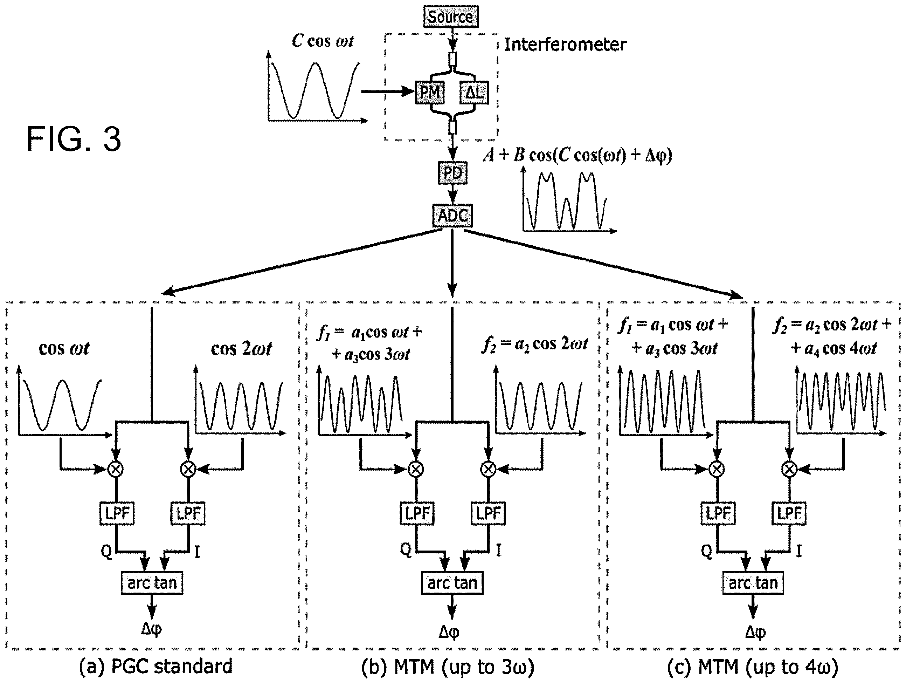

- Fig. 3 shows an interferometer with PGC active phase demodulation using three techniques: (a) Standard PGC, (b) MTM up to $3\omega$, (c) MTM up to $4\omega$. (b) and (c) are the schemes proposed in this work. The waveforms shown are the solutions for the nominal modulation depth $C = 0.84\pi$. MTM: Multitone mixing, PM: Phase modulator, PD: photodiode, ADC: analog-to-digital converter, LPF: low-pass filter, $\Delta L$: path difference between the interferometer arms;

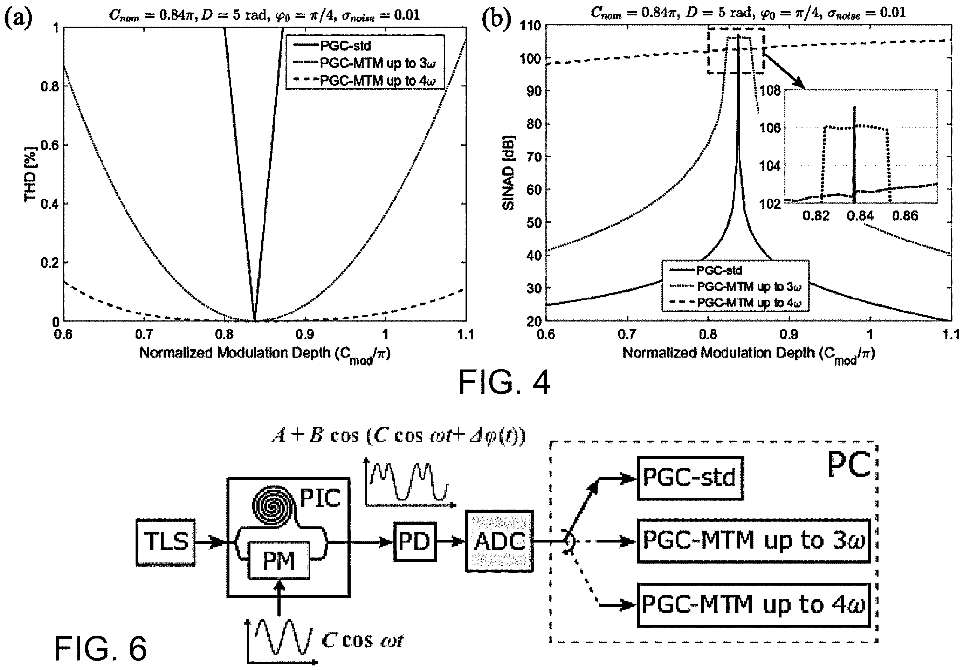

- Fig. 4 shows: (a) total harmonic distortion when $C$ deviates from the nominal value $C_{nom} = 0.84\pi$, extracted from the simulated data, for the three described demodulation techniques: standard (blue), MTM up to $3\omega$ (orange), and MTM up to $4\omega$. (b) Signal to noise and distortion ratio (SINAD) under the same conditions, introducing an artificial noise in the detected signal with $\sigma = 0.01$;

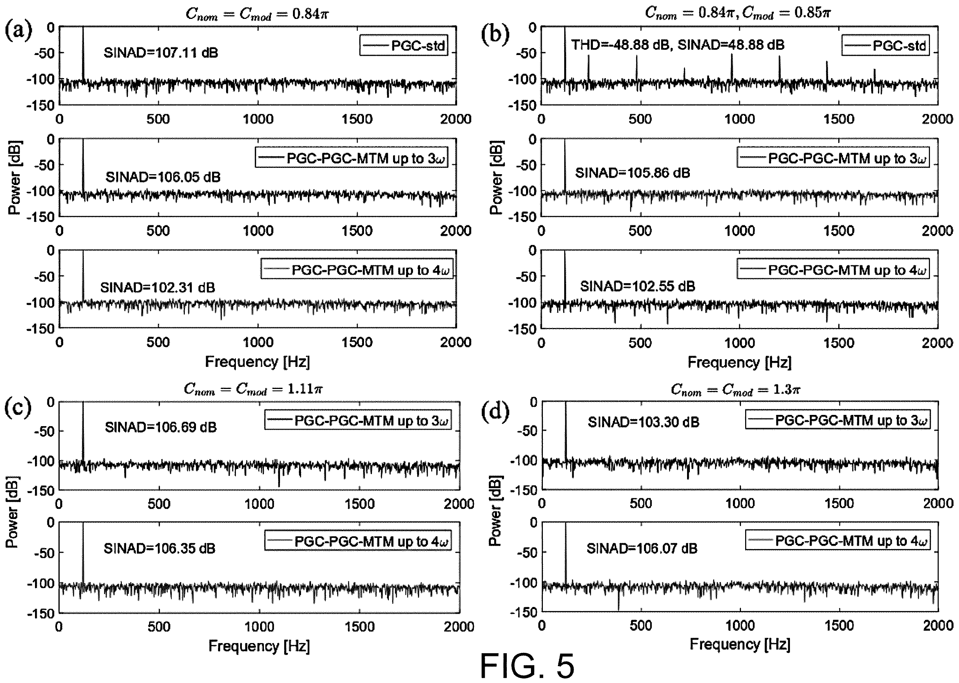

- Fig. 5 shows a comparison of the spectrum between PGC-MTM up to $3\omega$ and PGC-MTM up to $4\omega$ for: (a) $C_{nom} = C_{mod} = 0.84\pi$ and (b) $C_{nom} = 0.84\pi$, $C_{mod} = 0.86\pi$, and between PGC-MTM up to $3\omega$ and PGC-MTM up to $4\omega$ for:(c) $C_{nom} = C_{mod} = 1.11\pi$, and (d) $C_{nom} = C_{mod} = 1.3\pi$;
- Fig. 6 shows a general PGC schematic for demodulating the output of an integrated MZI. TLS: tunable laser; PM: phase modulator; PD: photodetector; ADC: analog-to-digital converter; LPF: low-pass filter;

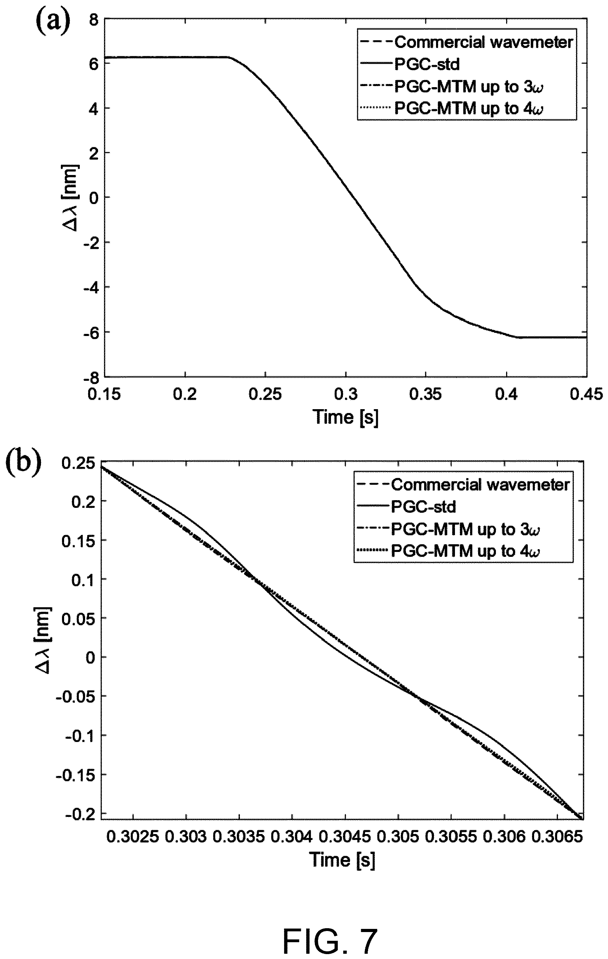

- Fig. 7 shows a comparison of the results of the wavelength shift measurement between PGC-std, the proposed PGC-MTM algorithms and a commercial wavemeter by IBSEN when $C_{nom} = 0.84\pi$ and $C_{mod} = 0.97\pi$. (a) View of the whole wavelength sweep. (b) Zoom of the measurement where it can be appreciated the non-linearity in the result of the PGC-std, which is absent in the traces obtained using the PGC-MTM algorithms and the IBSEN;

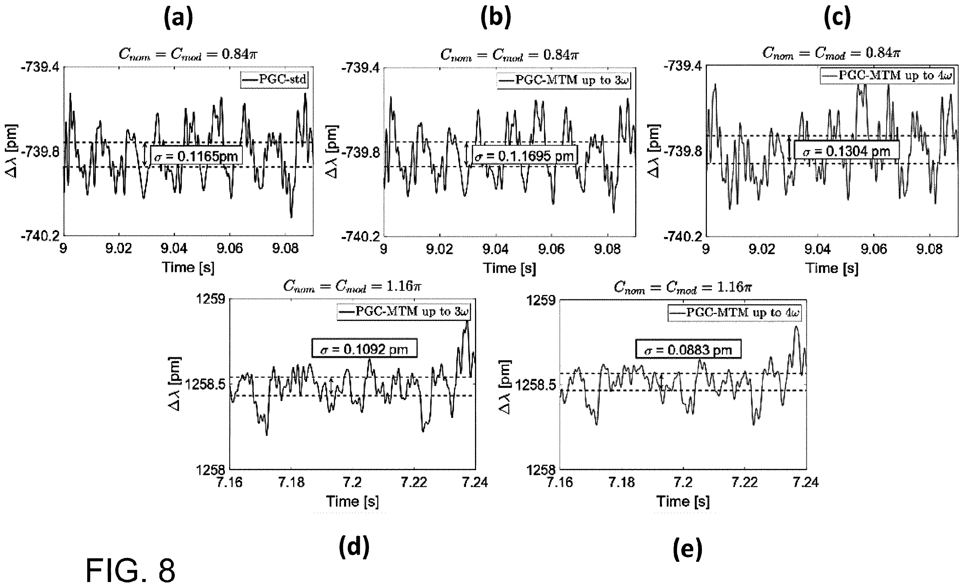

- Fig. 8 shows a comparison of the noise level of the demodulated signals for $C_{nom} = C_{mod} = 0.84\pi$ with (a) PGC-std, (b) PGC-MTM up to $3\omega$ and (c) PGC-MTM up to $4\omega$, and for $C_{nom} = 0.84\pi$ and $C_{mod} = 1.16\pi$ with (d) PGC-MTM up to $3\omega$ and (e) PGC-MTM up to $4\omega$; and

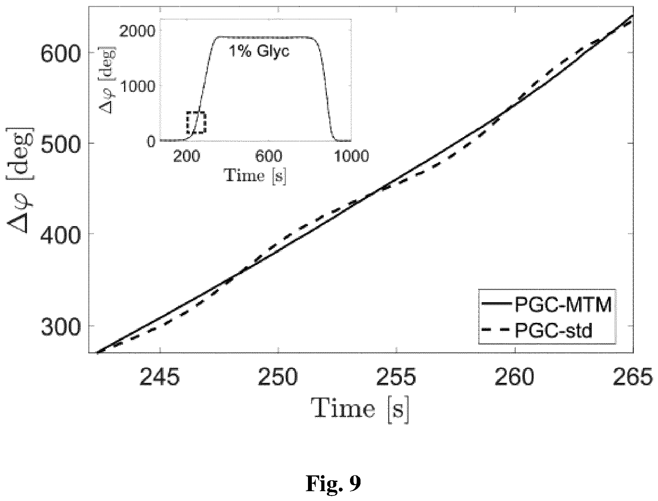

- Fig. 9 shows a comparison of the results using PGC-std and PGC-MTM up to $3\omega$ for refractrometry, during the transient caused by the introduction of 1% glycerol concentration in water (sensitivity of the interferometer is $1.31 \times 10^6$ deg/RIU).

It is specified here that elements of different embodiments can be combined together to provide further embodiments without limitations respecting the technical concept of the invention, as the person skilled in the art intends without problems from what has been described.

The present description further refers to the prior art for its implementation, with respect to the detailed features not described, such as for example elements of lesser importance usually used in the prior art in solutions of the same type.

When an element is introduced, it is always meant that it can be "at least one" or "one or more".

When a list of elements or features is listed in this description, it is understood that the invention according to the invention "comprises" or alternatively "is composed of" such elements.

By "computer" in this application is meant any programmable logic, such as for example a FPGA or a CPU. The invention can be implemented also on other types of hardware, such as analogic or digital circuity or (non-programmable) logic, such as a lock-in amplification circuit.

**Embodiments**

*The general concept*

In this description, we disclose a method for phase demodulation in a PGC system which we call multitone mixing (MTM), because it involves mixing the signal with synthetic multi-frequency reference waveforms. The method is robust to modulation depth variations and light intensity noise, and is also very simple to implement in a digital signal processing system. The method only requires two mixers, and no calibration is required, which means the correction can take place in real time with no previous data storage and without any signal variation requirement.

The invention concept comes from the fact that nowadays signal processing is mostly done in the digital domain. This means that mixers are digital multiplications, rather than the result of mixing two analog signals in a nonlinear medium. Thus, mixing with a sinusoidal waveform is typically performed by digitally multiplying the input signal by the analytic sinusoidal function, extracted from a look-up table or from a trigonometric function calculation. As a result, mixing with an arbitrary function different from a sinusoidal does not necessarily complicate the system, as it only implies a different look-up table to generate the reference waveform. When the reference signal is a linear combination of two frequencies, the dependence on the modulation depth is determined by the equivalent linear combination of Bessel functions of the first kind. The inventors found that when the parameters of the linear combination are chosen to match the first and even the second derivatives of the IQ components with respect to the modulation depth, the distortion can be dramatically reduced in presence of variations of the modulation depth.

To analytically describe the principle, we start with the output of a homodyne interferometer when one of the branches is modulated with a sinusoidal function:

$$I = A + B\cos\left[C\cos(\omega t) + \Delta\varphi(t)\right], \tag{1}$$

where $A$ and $B$ are related to the mixing efficiency of the MZI, $C$ is the phase modulation depth, $\omega$ is the modulation angular frequency, which should be much higher than that of the signal of interest, and $\Delta\varphi(t)$ is the phase difference between the branches, which is what we want to measure. As a matter of fact, $A$ and $B$ are proportional to the signal intensity $I$.

This signal can be expanded in terms of Bessel functions as [5]:

$$\begin{aligned} I = A + B\Bigg\{ &\left[J_0(C) + 2\sum_{k=1}^{\infty}(-1)^k J_{2k}(C)\cos 2k\omega t\right]\cos\Delta\varphi(t) \\ &-\left[2\sum_{k=0}^{\infty}(-1)^k J_{2k+1}(C)\cos(2k+1)\omega t\right]\sin\Delta\varphi(t)\Bigg\}. \end{aligned} \tag{2}$$

where $J_i$ represents the Bessel function of the first kind. This means that the $I$ component of the signal, proportional to the cosine of the phase, can be extracted from the even frequency components of the signal, while the $Q$ component can be extracted from the odd frequency components. The standard PGC-*arc tan* scheme (PGC-*std*) uses the first two multiples of $\omega$, so that the phase can be calculated as:

$$\Delta\varphi_{PGC-std}(t) = \arctan\left[\frac{J_1(C)I_\omega}{J_2(C)I_{2\omega}}\right], \tag{3}$$

where $I_\omega$ and $I_{2\omega}$ are the components of the signal in $\omega$ and $2\omega$ respectively. In the specific case of $C = 0.84\pi$ (value with the least noise, however any value can be used with the invention method), the Bessel functions coincide and the signals $I_\omega$ and $I_{2\omega}$ fall into a circumference when plotted in orthogonal axes. When $C$ deviates from this value, they form an ellipse, which can be easily renormalized by multiplying one of the signals by a correcting factor. However, in real situations $C$ may gradually change, or depend on some parameter like temperature. In these situations, the phase estimation will generate a distortion which can be approximated to the sum of the signal of interest $\Delta\varphi(t)$ plus a non-linear component [7], as:

$$\begin{aligned} \Delta\varphi_{PGC-std}(t) &= \Delta\varphi(t) + \arctan\left[\frac{\sin 2\Delta\varphi(t)}{\dfrac{\upsilon_{PGC-std}+1}{\upsilon_{PGC-std}-1} - \cos 2\Delta\varphi(t)}\right] \\ &\approx \Delta\varphi(t) + \frac{\upsilon_{PGC-std}-1}{2}\sin(2\Delta\varphi(t)), \end{aligned} \tag{4}$$

where $\upsilon_{PGC\text{-}std}$ is the distortion generated using the standard PGC method, which is given by:

$$\upsilon_{PGC-std} = \begin{cases} \dfrac{J_1(C)}{J_2(C)} & C \neq 0.84\pi \\ 1 & C = 0.84\pi \end{cases}, \tag{5}$$

and the approximation in Eq. 4 holds when $\upsilon_{PGC\text{-}std}$ is close to 1. To have a quantitative idea, a 5% variation of $C$ from the nominal value of $0.84\pi$ generates a DC phase error of 3.6 degrees in the worst case, which can be unacceptable when DC accuracy is important. Distortion can also generate unwanted harmonics in the spectrum of the signal. The dependence of the amount of distortion with variations of $C$ is given, in first approximation, by the derivative of $J_1(C)/J_2(C)$.

The concept of the invention here disclosed is to use a linear combination of the first few harmonics in order to generate functions with a distortion parameter $\upsilon$ to have a zero derivative with $C$, so that distortion will be reduced to the minimum for small variations of $C$.

This can be done by defining two general functions to be used as a reference for the mixing:

$$f_1(t) = a_1 \cos \omega t + a_3 \cos 3\omega t \tag{6.a}$$

$$f_2(t) = a_2 \cos 2\omega t + a_4 \cos 4\omega t. \tag{6.b}$$

Since these functions are synthetic, we have the freedom to choose the parameters $a_{1..4}$ to satisfy the conditions we need in order to minimize distortion. Considering that a global multiplicative number will not affect the quotient $f_1/f_2$, we can make $a_1 = 1$, so the only significant parameters become $a_{2...4}$. On the other hand, we also have the freedom to decide whether to use the 4th harmonic or not. In this first analysis, we will only consider the first three harmonics, which means that we will force $a_4 = 0$. Later in this description, we will consider the case including the 4th harmonic.

*The method up to $3\omega$*

The case without $4\omega$ can be preferable when the modulation depth is lower, so the amount of signal in the 4th harmonic is close to zero, which means that it could introduce noise in our output signal, as it will be shown below. In this case, by mixing (1) with the multitone signal $f_1(t) = \cos \omega t + a_3 \cos 3\omega t$, and the single carrier signal $f_2(t) = a_2 \cos 2\omega t$, and then low-pass filtering at the baseband, we obtain two signals that are proportional to $\sin \Delta\varphi(t)$ and $\cos \Delta\varphi(t)$:

$$I \otimes f_1 = B\left[J_1(C) - a_3 J_3(C)\right] \sin \Delta\varphi(t) = BS_1(C)\sin\Delta\varphi(t), \tag{7.a}$$

$$I \otimes f_2 = Ba_2 J_2(C)\cos\Delta\varphi(t) = BS_2(C)\cos\Delta\varphi(t), \tag{7.b}$$

where we have defined the new parameters $S_1(C)$ and $S_2(C)$ which will determine the distortion of the phase through the *arctan* method (the so-called Cross Difference Multiplication Method can also be used, as any other suitable method). Now, to minimize distortion at a nominal modulation depth $C$ we apply the following constraints to these parameters:

$$S_1(C) = S_2(C), \tag{8.a}$$

$$S_1'(C) = S_2'(C). \tag{8.b}$$

The constraint (8.a) imposes no distortion at the nominal $C$, and the constraint (8.b) (derivative) keeps distortion to the minimum for small variations around $C$. Substituting (7.a) and (7.b) in (8.a) and (8.b) we obtain the following matrix equation:

$$\begin{pmatrix} J_3(C) & J_2(C) \\ J_3'(C) & J_2'(C) \end{pmatrix} \begin{pmatrix} a_3 \\ a_2 \end{pmatrix} = \begin{pmatrix} J_1(C) \\ J_1'(C) \end{pmatrix}. \tag{9}$$

Therefore, in order to minimize distortion, we only need to solve (9) at the nominal modulation depth $C$. The derivatives of the Bessel functions can be calculated analytically using the recursive relationship [19]:

$$J_i'(C) = \frac{1}{2}\left[ J_{i-1}(C) - J_{i+1}(C) \right] \tag{10}$$

For the nominal modulation depth of $C = 0.84\pi$, the solution of (9) is $a_2 = 2.5806$ and $a_3 = -3.0339$, but the equation can be solved for other nominal modulation depths as well. In Fig. 1, we show the profiles of functions $S_1(C)$ and $S_2(C)$, together with the Bessel functions. It is clear that at the nominal $C$, $S_1$ and $S_2$ not only are equal but also their slopes, as imposed by (8.b).

Now we can calculate the phase $\Delta\varphi(t) \equiv \Delta\varphi_{MTM}(t)$ (MTM stands for "Multitone Mixing" according to the invention) from the ratio of the mixing with functions $f_1$ and $f_2$:

$$\Delta\varphi_{MTM}(t) = \arctan\left( \frac{I \otimes f_1}{I \otimes f_2} \right) = \arctan\left( \frac{S_1(C)\sin\Delta\varphi(t)}{S_2(C)\cos\Delta\varphi(t)} \right). \tag{11}$$

and the distortion from this method will be determined by the variation of the quotient $S_1/S_2$, which is our new distortion coefficient $\upsilon_{MTM}$:

$$\upsilon_{MTM} = \begin{cases} \dfrac{J_1(C) - a_3 J_3(C)}{a_2 J_2(C)} & C \neq 0.84\pi \\ 1 & C = 0.84\pi \end{cases} . \tag{12}$$

This coefficient will undergo a much smaller variation when $C$ deviates from the nominal value, because its first derivative with respect to $C$ is imposed to be zero, as shown in Fig. 1.

*MTM up to $4\omega$*

It is possible to make the PGC-MTM algorithm even more insensitive to the value of the modulation depth by considering $f_2(t) = a_2 \cos 2\omega t + a_4 \cos 4\omega t$, with $a_4 \neq 0$. After mixing and low-pass filtering, the following signals are obtained:

$$I \otimes f_1 = B\left[ a_1 J_1(C) - a_3 J_3(C) \right] \sin\Delta\varphi(t) = BS_1(C)\sin\Delta\varphi(t), \tag{13.a}$$

$$I \otimes f_2 = B\left[ a_2 J_2(C) - a_4 J_4(C) \right] \cos\Delta\varphi(t) = BS_2(C)\cos\Delta\varphi(t), \tag{13.b}$$

In this case, having an extra parameter allows us to apply a third condition; therefore, besides making the functions and their first derivatives equal in $C$, we will force the second derivative to be the same too, which will increase the distortion-free range even further. The conditions are mathematically described below:

$$S_1(C) = S_2(C), \tag{14.a}$$

$$S_1'(C) = S_2'(C), \tag{14.b}$$

$$S_1{}''(C) = S_2{}''(C). \qquad (14.c)$$

These three equations, when written in matrix form, considering $a_1 = 1$, become:

$$\begin{pmatrix} J_3(C) & J_2(C) & -J_4(C) \\ J_3'(C) & J_2'(C) & -J_4'(C) \\ J_3''(C) & J_2''(C) & -J_4''(C) \end{pmatrix} \begin{pmatrix} a_3 \\ a_2 \\ a_4 \end{pmatrix} = \begin{pmatrix} J_1(C) \\ J_1'(C) \\ J_1''(C) \end{pmatrix} \qquad (15)$$

Solving Eq. (15) for the nominal case $C = 0.84\pi$, we find the solutions $a_2 = 4.1936$, $a_3 = -9.7109$ and $a_4 = -9.8913$. In this case we have a distortion parameter $\upsilon_{MTM}$ equal to:

$$\upsilon_{MTM} = \begin{cases} \dfrac{J_1(C) - a_3 J_3(C)}{a_2 J_2(C) - a_4 J_4(C)} & C \neq 0.84\pi \\ 1 & C = 0.84\pi \end{cases}. \qquad (16)$$

Fig. 2 shows the evolution of the distortion parameter $\upsilon$ versus variations of the modulation depth with respect to the nominal value, applying the standard PGC and the MTM approach up to $3\omega$ and up to $4\omega$. It is clear that both MTM methods are much more robust to modulation depth variations; in particular, the case up to $4\omega$ has an even wider range, as expected, due to the extra condition cancelling the second derivative $\upsilon''(C)$.

Fig. 3 shows a system of a generic interferometer with active phase demodulation using three different PGC schemes: the standard PGC (Fig. 3(a)), the MTM up to $3\omega$ (Fig. 3(b)) and up to $4\omega$ (Fig. 3(c)). The waveforms shown correspond to the specific solutions at the nominal modulation depth $C = 0.84\pi$, using the solutions for $a_i$ coefficients shown above. The interferometer shown in this figure is a Mach-Zehnder type, but the method can be applied to other types of interferometers, such as the Michelson's.

*Generalized method*

The method above described can be generalized to an undefined number of harmonics.

The functions $f_1(t)$ and $f_2(t)$ can be written as:

$$f_1(t) = \sum_j a_{2j-1}\cos[(2j-1)\omega t] \qquad (17.a)$$

$$f_2(t) = \sum_k a_{2k}\cos[2k\omega t] \qquad (17.b)$$

for $k = 1...k_0$, and $j = 1, ... j_0$, $k_0$ and $j_0$ being predetermined integer numbers (two different indexes for odd and even harmonics, respectively). Similarly to Eq. (7.a) and (7.b) we can write the result of the mixing with the signal $I$ obtained from the interferometer as:

$$I \otimes f_1(t) = B\sum_j \left[(-1)^j a_{2j-1} J_{2j-1}(C)\right]\sin\Delta\varphi(t) = BS_1(C)\sin\Delta\varphi(t) \qquad (18.a)$$

$$I \otimes f_2(t) = B\sum_k \left[(-1)^{k+1} a_{2k} J_{2k}(C)\right]\cos\Delta\varphi(t) = BS_2(C)\cos\Delta\varphi(t) \qquad (18.b)$$

Where $S_1(C) = \Sigma_j[(-1)^j a_{2j-1} J_{2j-1}(C)]$ and $S_2(C) = \Sigma_j[(-1)^{j+1} a_{2j} J_{2j}(C)]$, therefore the phase shift can be calculated using Eq. (11) above. The matrix system of Eq. (15) is of course extended to $j_0 + k_0 - 1$ equations, wherein the first row will contain zero-derivative, the second row first derivative, and so on to the last row that will include only $(j_0 + k_0 - 2)$-order derivatives of Bessel functions $J_2$ to $J_n$ wherein $n = j_0 + k_0$.

The same result can be obtained by first generating each harmonic and then performing a linear combination of the products of each harmonic with $I$. In this case, the phase $\varphi$ can be extracted from the quadrature and in-phase

components:

$$BS_1(C)\sin(\varphi) = \sum_j a_{2j-1} I_{(2j-1)\omega} \qquad (19.\text{a})$$

$$B\,S_2(C)\cos(\varphi) = \sum_k a_{2k} I_{2k\omega} \qquad (19.\text{b})$$

where $I_{n\omega}$ is the amplitude of the *n*-th harmonic extracted from the signal output, *B* a constant proportional to the signal intensity that will be cancelled out in the ratio to calculate the phase, since the sums on the right-hand sides of the relationships are obtained from the quadrature and in-phase mixed signals. The values of the parameters for each harmonic is obtained by minimizing the distortion parameters with the following conditions up to derivative $n = j_0 + k_0 -2$:

$$\frac{d^n v}{dC^n}(C_0) = 0 \qquad (20)$$

$C_0$ being the nominal modulation depth; and $\upsilon(C)$ being the distortion parameter defined as:

$$v(C) = \frac{\sum_j (-1)^j a_{2j-1} J_{2j-1}(C)}{\sum_k (-1)^{k+1} a_{2k} J_{2k}(C)} \qquad (21)$$

This is equivalent to setting conditions on the derivatives of $S_1(C)$ and $S_2(C)$.

Eq. 21 is valid when the carrier phase delay $\theta$ is negligible. In cases in which it is not negligible, a correction factor equal to $\cos(k\theta)$ must be introduced to every harmonic $k$ [18]. Therefore the more general estimation of distortion in presence of carrier phase delay would be equal to:

$$v(C) = \frac{\sum_j (-1)^j a_{2j-1} \cos\left[(2j-1)\theta\right] J_{2j-1}(C)}{\sum_k (-1)^{k+1} a_{2k} \cos\left[2k\theta\right] J_{2k}(C)}$$

$$(21\text{b})$$

*Performance Analysis*

In order to test the method and quantitatively calculate the performance in terms of distortion and noise, we apply the method to a simulated interferometer signal with a sinusoidal waveform in presence of Gaussian noise. The signal at the input of the interferometer is:

$$\Delta\varphi(t) = D\cos 2\pi f_p t + \varphi_0, \qquad (22)$$

with frequency $f_p$=120 Hz, amplitude D = 5 rad, and initial phase $\varphi_0 = \pi/4$. A strong signal amplitude was selected to appreciate the distortion effect, since this would be negligible for a small signal. The phase $\varphi_0$ was centered at $\pi/4$ because at this position the noise in the in-phase and quadrature components contribute equally. Considering this input, we simulated the following intensity signal detected by the photodiode:

$$I = A + B\cos\left[C_{\text{mod}}\cos\left(2\pi f_{\text{mod}} t\right) + D\cos(2\pi f_p t) + \varphi_0\right] + I_{noise}, \qquad (23)$$

where we assumed A=1/2, $f_{mod}$ = 10 kHz, and in $I_{noise}$ we introduced a white noise with standard deviation $\sigma_{\text{noise}}$ = 0.01. The resulting signal was processed as explained in the previous section, mixing with multiples of $f_{mod}$ and low-pass-filtered with a bandwidth of 4kHz.

To measure and compare the performance of the PGC algorithms we calculated the total harmonic distortion (THD), defined as the ratio between the equivalent root-mean-square amplitude of all the harmonics and the amplitude of the fundamental frequency of the demodulated signal, given by [20]:

$$\text{THD}=\frac{\sqrt{\sum_{k=2}^{\infty}V_k^2}}{V_1}, \tag{24}$$

where $V_1$ is the amplitude of the fundamental harmonic and $V_k$ is the amplitude of the kth harmonic. We also compare the performance in terms of the signal-to-noise and distortion ratio (SINAD), defined as the ratio between the power of the fundamental frequency, $P$s, and the sum of the power of the additive noise, $P_N$, and distortion components (harmonics) of the demodulated signal, $P_D$, given by [21]:

$$\text{SINAD}=\frac{P_S}{P_N+P_D}. \tag{25}$$

While THD quantifies the effect of the modulation depth deviation on the distortion of the demodulated signal, SINAD not only measures the effect of the distortion, but also considers the effect of the presence of noise in the demodulated signal.

Fig. 4 shows the results for a nominal modulation depth of $C_{nom}$ = 0.84$\pi$, which is the value typically used in the standard PGC. For the THD results, the first thing we can see in Fig. 4(a) is that when $C_{mod}$ = 0.84$\pi$ the THD is zero, meaning there is no distortion for any of the algorithms, since in this case the value of $\upsilon$ in (4) is one, cancelling the non-linear term. When the deviation of $C_{mod}$ from the nominal value increases, so does the THD for all the PGC methods; however, since the variation of $\upsilon$ with respect to $C_{mod}$ is much larger for PGC-std than for the proposed algorithms (see Fig. 2), its THD is also higher compared to PGC-MTM up to 3$\omega$ and PGC-MTM up to 4$\omega$, therefore the proposed algorithms are more robust to modulation depth deviations. Regarding the SINAD, we can see in Fig. 4(b) that for the ideal case in which $C_{nom}$ = $C_{mod}$ = 0.84$\pi$ the SINAD is slightly higher for PGC-std, at 107.1 dB, than for PGC-MTM up to 3$\omega$, however as the deviation of the modulation depth from the nominal value increases, the SINAD for PGD-std rapidly decreases, whereas for PGC-MTM up to 3$\omega$ it remains at ~106 dB for $C_{mod}$ between ~0.82$\pi$ and ~0.85$\pi$, meaning that in this range this algorithm is less noisy than PGC-MTM up to 4$\omega$, with a SINAD of ~102 dB. Outside of this range the SINAD rapidly decreases for PGC-MTM up to 3$\omega$, being lower than for PGC-MTM up to 4$\omega$, hence for cases in which the modulation depth deviation is small, it is better to use PGC-MTM up to 3$\omega$, since it is more robust to noise effects than PGC-MTM up to 4$\omega$, and it has a lower THD than PGC-std outside the nominal case.

To further illustrate how distortion and noise affect the acquired signal, in Fig. 5 we show the power spectral density of the demodulated signals at different modulation depths. For $C_{nom}$ = $C_{mod}$ = 0.84$\pi$ there is no distortion for any of the PGC algorithms and we can see that the SINAD is better for PGC-std, followed by PGC-MTM up to 3$\omega$, as shown in Fig. 5(a), but a deviation of ~1.2% in the modulation depth from the nominal case ($C_{mod}$ = 0.85$\pi$) causes visible distortion in PGC-std, as shown in Fig. 5(b), resulting in a THD = -48.88 dB and SINAD= 48.88 dB, whereas there is still no distortion for the PGC-MTM algorithms. Fig. 5(b) also shows that in this case the SINAD is higher for PGC-MTM up to 3$\omega$ than for PGC-MTM up to 4$\omega$, hence the former has a better performance.

Up until this point, we have evaluated the performance of the PGC-MTM algorithms for a nominal modulation depth of $C_{nom}$ = 0.84$\pi$, but we can calculate the coefficients of the mixing signals $f_1$ and $f_2$ for other nominal values (see sections II.1 and II.2). Evaluating the SINAD for different nominal modulation depths we found that for a value around $C_{nom}$ = 1.11$\pi$ the SINAD value for PGC-MTM up to 3$\omega$ and PGC-MTM up to 4$\omega$ is approximately the same, as shown in Fig. 5(c), and if we increase $C_{mod}$ even more we can reach a scenario in which the SINAD for the method using up to 4$\omega$ is better than for up to 3$\omega$, as shown in Fig. 5(d), showing that in applications when the phase modulator can reach these high modulation depth values, we can obtain a better performance with PGC-MTM up to 4$\omega$, that is comparable to the one obtained with PGC-std for $C_{nom}$ = 0.84$\pi$.

In conclusion, these results show that at a nominal modulation depth of 0.84$\pi$, which is the one used in the standard PGC, the noise penalty of the MTM method up to 3$\omega$ with respect to the standard method is almost negligible (~1dB), while the MTM up to 4$\omega$ has a higher penalty (~5dB), which means that the MTM up 3$\omega$ is best suited for this modulation depth. However, if our modulator allows applying a higher modulation depth (between 1.11$\pi$ and 1.3$\pi$), the noise penalty of the MTM up to 4$\omega$ becomes negligible, making it the best method in terms of distortion and noise.

### Experiments and Results

In this section we will show experimental results of the proposed invention (MTM) technique compared to the standard PGC scheme. The MTM method can be applied to a variety of interferometers in which the phase can be modulated externally. For instance, the phase can be modulated in one of the arms using a piezoelectric actuator, like in the case of some fiber-optic based interferometers (FOIs) [7], or through thermo-optic effect [22], carrier injection/depletion or other phase shifting mechanisms in photonic integrated circuit-based interferometers. The method can also be applied modulating the optical source [23], but in this case the interferometer must be unbalanced, so that wavelength changes are converted into phase variations.

*Integrated interferometer design*

For the experimental demonstration we show in the following sections results of the method in two applications.
The first application is a wavemetering experiment using an unbalanced MZI on SiPh platform, fabricated at CEA-Leti with deep-UV lithography, [22]. This device consists of two MZIs, one with path difference $\Delta L$ = 118.6 $\mu$m and FSR of 4.8 nm (600 GHz), so called coarse, and another with $\Delta L$ = 948.7$\mu$m and FSR of 595 pm (75 GHz), so called fine, which share the same input vertical grating coupler through a 2-by-2 multimode interference (MMI) coupler. The shorter arm of each MZI included phase modulator based on the thermo-optic effect, consisting of a metal Ti/TiN heater track with length of 86 $\mu$m and width of 1.43 $\mu$m, with a V$\pi$ p-p of 3.69 V, and a 1/e time constant of 7 $\mu$s. Each MZI has an output grating coupler for coupling to external photoreceivers.
Both MZI configurations included a thermal modulator to allow the implementation of the PGC technique. Both chips include two MZIs with different spiral lengths sharing the same input. For our experiments we used the MZIs with longer spirals, so called fine, that provide a higher responsivity than the ones with shorter spirals, so called coarse [22].

*Experimental setup*

The schematic of the experimental setup is shown in Fig. 6. In this configuration, the integrated unbalanced MZI is employed as a wavemeter to measure a wavelength shift generated using a tunable external cavity laser model EXFO T100S-HP (output power set to 10mW). In order to apply the PGC algorithms the phase modulator of the MZI was driven using the square-root of a sinusoidal signal at 1 kHz, since the power on the thermal phase shifter is proportional to the square of the applied voltage. The output of the interferometer was coupled to an external InGaAs based photoreceiver with a responsivity of ~5·$10^4$ V/W and 775 kHz bandwidth. The traces were collected with a 16-bit data acquisition card model MCDAQ USB-1608FS at 100kS/s. Additionally, we compared the measurements with the commercial wavemeter model I-MON 512 USB from Ibsen Photonics A/S.

*Results*

To compare the performance of the different PGC algorithms when the modulation depth deviates from the nominal case of $C_{nom}$ = 0.84$\pi$ we measured a wavelength shift from ~1560 nm to ~1547 nm while applying a modulation depth of $C_{mod}$ = 0.97$\pi$ to the phase shifter in one of the arms of the MZI. Fig. 7(a) shows the demodulated trances in the whole measuring range and Fig. 7(b) shows a zoom of the measurement. In the latter it can be appreciated that the PGC-std algorithm has visible non-linearities in the form of an undulation that occurs every $\pi/2$ shift, or every quarter of the free spectral range of the MZI, whereas for PGC-MTM up to 3$\omega$ and up to 4$\omega$ there are no visible non-linearities when compared to the trace obtained with the commercial wavemeter, demonstrating the robustness of the PGC-MTM algorithms to modulation depth deviations.
In order to compare the noise levels for the different demodulation schemes, we measured the standard deviation of the signal when the wavelength was fixed. In Fig. 8(a-c) we show the noise traces for the standard, MTM up to 3$\omega$, and MTM up to 4$\omega$ techniques respectively, for the case in which $C_{nom}$ = $C_{mod}$ = 0.84$\pi$, which yielded the minimum noise. From these figures, the standard deviation of the standard and MTM up to 3$\omega$ are very similar, 0.116 pm, while the MTM up to 4$\omega$ yielded a slightly higher noise of 0.130 pm. An increase in noise with the MTM up to 4$\omega$ at this modulation depth was predicted in the previous section. However, the amount of the increase of noise is lower in the experiment than in the simulation (Fig. 4(b) shows ~5dB noise penalty); we attribute this to the contribution of wavelength noise of the source itself, which was not considered in the simulation.
On the other hand, Fig. 8(d) and (e) show the experimental noise levels when the nominal modulation depth is increased to $C_{nom}$ = $C_{mod}$ = 1.16$\pi$ (value with the least noise, but other values can be used by the invention method), showing that the noise of the MTM up to 4$\omega$ technique is reduced again (down to 0.09 pm), as predicted from the simulation results shown in Fig. 5(d).
These results provide experimental evidence of the fact that distortion can be corrected with the MTM technique, and that the noise does not increase significantly with respect to the standard PGC technique, in particular for the MTM up to 3$\omega$, at $C_{nom}$ = 0.84$\pi$, and neither for the even more robust MTM up to 4$\omega$ when a higher modulation depth is applied.

*Chemical sensing measurements*

The second application is refractrometry measurements using a balanced MZI-based chemical sensor on SiPh platform fabricated at InPhoTec facilities using e-beam lithography (design details can be found in [24]). The results of the chemical sensor are shown in Fig. 9, with a comparison of the results using PGC-std and PGC-MTM up to $3\omega$ (sensitivity $1.31 \times 10^6$ deg/RIU) . In this experiment we measured the phase shift induced by the refractive index change between a deionized water (DIW) baseline and the injection of a glycerol aqueous solution at 1% volume concentration (see inset in Fig. 9). In this case to prove the robustness of PGC-MTM, we applied a modulation depth of $C \sim 0.93\pi$, deviating from the standard PGC condition ($C_0 = 0.84\pi$). As a result, the signal demodulated using PGC-std shows undulations every 90 degrees, due to the introduced harmonic distortion, while under the same modulation depth condition the result obtained using PGC-MTM has no visible distortion and appears to be quite linear.

## Advantages of the invention

The invention method is a novel active phase demodulation technique for optical interferometers which strongly reduces distortion under deviations of the modulation depth. These deviations can originate from thermal fluctuations, or other external effects. In addition, tolerance to modulation depth variation would also be necessary when one single driving source is used to modulate different interferometers with slightly different characteristics. Finally, another application of this scheme is a situation in which a single interferometer is used to measure the signal coming from different transducers simultaneously using a wavelength-division multiplexing (WDM) scheme. Dispersion effects may generate a difference in the voltage needed to generate a certain phase shift for each transducer. In this case, $C$ cannot be the same for every channel, which would generate distortion in the channels where $C$ deviates from the nominal value. The multitone mixing scheme proposed here would strongly reduce the distortion in these channels because the system would be much more tolerant to deviations from the nominal modulation depth $C_0$.

The technique, called multitone mixing, consists in mixing the output waveform with linear combinations of even and odd harmonics of the modulating frequency, and choosing the coefficients to cancel the first and possibly the successive derivatives of the distortion parameter $\upsilon$. The technique has several advantages with respect to previous proposed solutions, in particular, not requiring signal variations, ellipse fitting algorithms, or recording previous data, it can determine the DC component of the phase. The technique is also experimentally validated with a wavelength metering integrated interferometer and a chemical sensing experiment, and shows no noise penalty with respect to the standard PGC technique.

## References

1. M. D. Todd, G. A. Johnson and C. C. Chang, "Passive, light intensity-independent interferometric method for fibre Bragg grating interrogation."," Electronics Letters, vol. 35, no. 22, pp. 1970-1971, 1999.

2. A. D. Kersey, T. A. Berkoff and W. W. Morey, "High-resolution fibre-grating based strain sensor with interferometric wavelength-shift detection," Electronics Letters, vol. 28, p. 236-238, 1992.

3. D. A. Jackson, A. D. Kersey, M. Corke and J. D. C. Jones, "Pseudoheterodyne detection scheme for optical interferometers," Electronics Letters, vol. 18, p. 1081-1083, 1982.

4. M. Song, S. Yin and P. B. Ruffin, "Fiber Bragg grating strain sensor demodulation with quadrature sampling of a Mach-Zehnder interferometer," Applied Optics, vol. 39, p. 1106, 3 2000.

5. A. Dandridge, A. B. Tveten and T. G. Giallorenzi, "Homodyne Demodulation Scheme for Fiber Optic Sensors Using Phase Generated Carrier," IEEE Journal of Quantum Electronics, vol. 18, p. 1647-1653, 1982.

6. L. Wang, M. Zhang, X. Mao and Y. Liao, "The arctangent approach of digital PGC demodulation for optic interferometric sensors," in Interferometry XIII: Techniques and Analysis, 2006.

7. J. He, L. Wang, F. Li and Y. Liu, "An Ameliorated Phase Generated Carrier Demodulation Algorithm With Low Harmonic Distortion and High Stability," Journal of Lightwave Technology, vol. 28, no. 22, pp. 3258-3265, 2010.

8. A. Zhang and S. Zhang, "High Stability Fiber-Optics Sensors with an Improved PGC Demodulation Algorithm," IEEE Sensors Journal, vol. 16, p. 7681-7684, 2016.

9. G. Q. Wang, T. W. Xu and F. Li, "PGC demodulation technique with high stability and low harmonic distortion," IEEE Photonics Technology Letters, vol. 24, p. 2093-2096, 2012.

10. S. Zhang, Y. Chen, B. Chen, L. Yan, J. Xie and Y. Lou, "A PGC-DCDM demodulation scheme insensitive to phase modulation depth and carrier phase delay in an EOM-based SPM interferometer," Optics Communications, p. 126183, 2020.

11. H. A. Deferrari, R. A. Darby and F. A. Andrews, "Vibrational Displacement and Mode-Shape Measurement by a Laser Interferometer," The Journal of the Acoustical Society of America, vol. 42, p. 982-990, 1967.

12. O. Sasaki and H. Okazaki, "Sinusoidal phase modulating interferometry for surface profile measurement," Applied Optics, vol. 25, no. 18, p. 3137, 1986.

13. Y. Tong, H. Zeng, L. Li and Y. Zhou, "Improved phase generated carrier demodulation algorithm for eliminating light intensity disturbance and phase modulation amplitude variation," Applied Optics, vol. 51, p. 6962-6967, 2012.

14. V. S. Sudarshanam and K. Srinivasan, "Linear readout of dynamic phase change in a fiber-optic homodyne interferometer," Optics Letters, vol. 14, p. 140, 1989.

15. A. V. Volkov, M. Y. Plotnikov, M. V. Mekhrengin, G. P. Miroshnichenko and A. S. Aleynik, "Phase Modulation Depth Evaluation and Correction Technique for the PGC Demodulation Scheme in Fiber-Optic Interferometric Sensors," IEEE Sensors Journal, vol. 17, p. 4143-4150, 2017.

16. Z. Qu, S. Guo, C. Hou, J. Yang and L. Yuan, "Real-time self-calibration PGC-Arctan demodulation algorithm in fiber-optic interferometric sensors," Optics Express, vol. 27, p. 23593, 2019.

17. S. Zhang, B. Y. L. Chen and Z. Xu, "Real-time normalization and nonlinearity evaluation methods of the PGC-arctan demodulation in an EOM-based sinusoidal phase modulating interferometer," Optics Express, vol. 26, no. 2, pp. 605-616, 2018.

18. J. Xie, L. Yan, B. Chen and Y. Lou, "Extraction of Carrier Phase Delay for Nonlinear Errors Compensation of PGC Demodulation in an SPM Interferometer," Journal of Lightwave Technology, vol. 37, p. 3422-3430, 2019.

19. M. Abramowitz and I. A. Stegun, Handbook of Mathematical Functions, With Formulas, Graphs, and Mathematical Tables, USA: Dover Publications, Inc., 1972, p. 361.

20. D. Shmilovitz, "On the definition of total harmonic distortion and its effect on measurement interpretation.," IEEE Transactions on Power Delivery, vol. 20, no. 1, pp. 526-528, 2005.

21. P. M. Lavrador, N. B. d. Carvalho and J. C. Pedro, "Noise and distortion figure - an extension of noise figure definition for nonlinear devices.," in IEEE MTT-S International Microwave Symposium Digest, Philadelphia, 2003.

22. Y. E. Marin, A. Celik, S. Faralli, L. Adelmini, C. Kopp, F. D. Pasquale and C. Oton, "Integrated Dynamic Wavelength Division Multiplexed FBG Sensor Interrogator on a Silicon Photonic Chip," Journal of Lightwave Technology , vol. 37, no. 18, pp. 4770 - 4775, 2019.

23. T. R. Christian, P. A. Frank and B. H. Houston, "Real-time analog and digital demodulator for interferometric fiber optic sensors," in Proceedings Volume 2191, Smart Structures and Materials 1994: Smart Sensing, Processing, and Instrumentation, Orlando, FL, United States, 1994.

24. Y. E. Marin, "Silicon Photonic Biochemical Sensor on Chip Based on Interferometry and Phase-Generated-Carrier Demodulation," IEEE J. Sel. Top. Quant., vol. 25, no. 1, pp. 1-9, 2019.

In the foregoing, the preferred embodiments have been described and variants of the present invention have been suggested, but it is to be understood that those skilled in the art will be able to make modifications and changes without thereby departing from the relative scope of protection, as defined by the attached claims.

## Claims

1. A method for demodulating a waveform $I$ outputting from an interferometer with two branches, at least one of the branches being modulated with a sinusoidal function, the waveform being $I = A + B\cos[C_0\cos(\omega t) + \Delta\varphi(t)]$, wherein $A$ and $B$ are parameters related to a mixing efficiency of the interferometer, $C_0$ is a nominal phase modulation depth of the interferometer, $\Delta\varphi(t)$ is a phase difference between the two branches, $\omega$ is a modulation angular frequency of the interferometer and $t$ the time; Wherein the following steps are executed by a circuity or logic:

P1. Acquiring said waveform $I$ from the interferometer;

P2. Generating functions $\cos[2k\omega t]$ and $\cos[(2j-1)\omega t]$ for $k = 1...k_0$, and $j = 1, ...j_0$, $k_0$ and $j_0$ being predetermined integer numbers;

P3. Calculating and low-pass-filtering the products, for every $k = 1...k_0$ and $j = 1, ... j_0$:

$$I \otimes \cos[2k\omega t] \equiv I_{2k\omega}$$

$$I \otimes \cos[(2j-1)\omega t] \equiv I_{(2j-1)\omega}$$

P4. Determining coefficients $a_{2k}$ and $a_{2j-1}$ by imposing the conditions:

$$\frac{d^n v}{dC^n}(C_0) = 0$$

for $n = 0,... k_0 + j_0\text{-}2$ on a distortion parameter $\upsilon(C)$ defined as:

$$v(C) = \frac{\sum_j (-1)^j a_{2j-1} J_{2j-1}(C)}{\sum_k (-1)^{k+1} a_{2k} J_{2k}(C)}$$

Wherein $J_i$, with $i$ an integer number, represents the Bessel function of the first kind;

P5. Linearly combining $I_{2k\omega}$ and $I_{(2j-1)\omega}$ of step P3 for every $k = 1...k_0$ and $j = 1, ... j_0$ with respective coefficients $a_{2k}$ and $a_{2j-1}$ of step P4, obtaining linear combinations $\Sigma_j a_{2j-1} I_{(2j-1)\omega}$ and $\Sigma_k a_{2k} I_{2k\omega}$;

P6. Calculating $\Delta\varphi(t)$ using the linear combinations of step P5 and the following relationships;

$$\sum_j a_{2j-1} I_{(2j-1)\omega} = BS_1(C)\sin(\Delta\varphi)$$

$$\sum_k a_{2k} I_{2k\omega} = BS_2(C)\cos(\Delta\varphi).$$

Wherein $S_1(C) = \Sigma_j[(-1)^j a_{2j-1} J_{2j-1}(C)]$ and $S_2(C) = \Sigma_j[(-1)^{j+1} a_{2j} J_{2j}(C)]$, and $S_1(C) = S_2(C)$.

2. A method according to claim 1, wherein $k_0 = 2$ and $j_0 = 2$.

3. A method according to claim 1, wherein $k_0 = 1$ and $j_0 = 2$.

4. A method for demodulating a waveform $I$ outputting from an interferometer with two branches, one of the branches being modulated with a sinusoidal function, the waveform being $I = A + B\cos[C_0 \cos(\omega t) + \Delta\varphi(t)]$, wherein $A$ and $B$ are parameters related to a mixing efficiency of the interferometer, $C_0$ is a nominal phase modulation depth of the interferometer, $\Delta\varphi(t)$ is a phase difference between the two branches, $\omega$ is a modulation angular frequency of the interferometer and $t$ the time;

Wherein the following steps are executed by a circuitry or logic:

P1. Acquiring said waveform $I$ from the interferometer;

P2. Determining coefficients $a_{2k}$ and $a_{2j-1}$ for $k = 1...k_0$, and $j = 1, ...j_0$, $k_0$ and $j_0$ being predetermined integer numbers, by imposing the conditions:

$$\frac{d^n v}{dC^n}(C_0) = 0$$

for $n = 0,... k_0 + j_0\text{-}2$ on a distortion parameter $\upsilon(C)$ defined as:

$$v(C) = \frac{\sum_j (-1)^j a_{2j-1} J_{2j-1}(C)}{\sum_k (-1)^{k+1} a_{2k} J_{2k}(C)}$$

Wherein $J_i$, with $i$ an integer number, represents the Bessel function of the first kind;

P3. Generating the functions:

$$f_1(t) = \sum_j a_{2j-1}\cos[(2j-1)\omega t]$$

$$f_2(t) = \sum_k a_{2k}\cos[2k\omega t]$$

P4. Calculating and low-pass filtering the products $I \otimes f_1$ and $I \otimes f_2$;

P5. Calculating $\Delta\varphi(t)$ on the basis of $I \otimes f_1$ and $I \otimes f_2$ of step P4 using the following relationships:

$$I \otimes f_1 = BS_1(C)\sin(\Delta\varphi)$$

$$I \otimes f_2 = BS_2(C)\cos(\Delta\varphi)$$

Wherein $S_1(C) = \Sigma_j[(-1)^j a_{2j-1} J_{2j-1}(C)]$ and $S_2(C) = \Sigma_j[(-1)^{j+1} a_{2j} J_{2j}(C)]$, and $S_1(C) = S_2(C)$.

5. A method according to claim 4, wherein $k_0 = 2$ and $j_0 = 2$, and

$$f_1(t) = a_1 \cos \omega t + a_3 \cos 3\omega t$$

$$f_2(t) = a_2 \cos 2\omega t + a_4 \cos 4\omega t.$$

wherein $a_1 = 1$ and $a_2, a_3, a_4$ are calculated as a solution of the following equations system:

$$\begin{pmatrix} J_3(C) & J_2(C) & -J_4(C) \\ J_3'(C) & J_2'(C) & -J_4'(C) \\ J_3''(C) & J_2''(C) & -J_4''(C) \end{pmatrix} \begin{pmatrix} a_3 \\ a_2 \\ a_4 \end{pmatrix} = \begin{pmatrix} J_1(C) \\ J_1'(C) \\ J_1''(C) \end{pmatrix}$$

wherein $J_i$, $J_i'$, $J_i''$ for $i = 1...4$ represent the zero, first and second derivatives of the Bessel function of the first kind.

6. A method according to claim 4, wherein $k_0 = 1$ and $j_0 = 2$ and

$$f_1(t) = \cos \omega t + a_3 \cos 3\omega t,$$

$$f_2(t) = a_2 \cos 2\omega t$$

wherein $a_3$ and $a_2$ are calculated as a solution of the following system:

$$\begin{pmatrix} J_3(C) & J_2(C) \\ J_3'(C) & J_2'(C) \end{pmatrix} \begin{pmatrix} a_3 \\ a_2 \end{pmatrix} = \begin{pmatrix} J_1(C) \\ J_1'(C) \end{pmatrix}$$

wherein $J_i$, $J_i'$ for $i = 1...3$ respectively represent the zero and first derivatives of the Bessel function of the first kind.

7. A method according to any claim 4 to 6, wherein the phase difference between the two branches $\Delta\varphi(t)$ is calculated as:

$$\Delta\varphi(t) = arctan\left(\frac{I \otimes f_1}{I \otimes f_2}\right)$$

8. A method according to any claim 1 to 7, wherein the distortion parameter $\upsilon(C)$ includes a correction factor due to carrier phase delay $\theta$.

$$\upsilon(C) = \frac{\sum_j (-1)^j a_{2j-1} \cos[(2j-1)\theta] J_{2j-1}(C)}{\sum_k (-1)^{k+1} a_{2k} \cos[2k\theta] J_{2k}(C)}$$

9. A method according to any claim 1 to 8, wherein the circuitry or logic is digital.

10. Computer program, comprising code means configured to execute, when running on a computer, the method according to one or more claims 1 to 9.

11. An interferometric measurement system, comprising:

- an interferometer with two branches, at least one of the branches being modulated with a sinusoidal function, the interferometer outputting a waveform *I* and being connected to
- a circuitry or logic;

Wherein the waveform *I* is acquired by the circuitry or logic, and wherein the circuitry or logic is configured to execute the steps of the method according to claim 1 to 9.

12. An interferometric measurement system according to claim 11, wherein the circuitry or logic is a computer, whereon the computer program of claim 10 is installed.

**Patentansprüche**

1. Verfahren zum Demodulieren einer Wellenform *I,* die von einem Interferometer mit zwei Zweigen ausgegeben wird, wobei mindestens einer der Zweige mit einer Sinusfunktion moduliert ist, wobei die Wellenform $I = A + B\cos[C_0 \cos(\omega t) + \Delta\varphi(t)]$ ist, wobei *A* und *B* Parameter sind, die eine Mischeffizienz des Interferometers betreffen, $C_0$ eine Nenn-Phasenmodulationstiefe des Interferometers ist, $\Delta\varphi(t)$ eine Phasendifferenz zwischen den beiden Zweigen ist, $\omega$ eine Modulationskreisfrequenz des Interferometers ist und *t* die Zeit ist;
   wobei die folgenden Schritte durch eine Schaltung oder Logik ausgeführt werden:

   P1. Erfassen der Wellenform I vom Interferometer;
   P2. Erzeugen von Funktionen $\cos[2k\omega t]$ und $\cos[(2j-1)\omega t]$ für $k = 1...k_0$ und $j = 1, ...j_0$, wobei $k_0$ und $j_0$ vorgegebene ganze Zahlen sind;
   P3. Berechnen und Tiefpassfiltern der Produkte für alle $k = 1...k_0$ und $j = 1, ...j_0$:

$$I \otimes \cos[2k\omega t] = I_{2k\omega}$$

$$I \otimes \cos[(2j-1)\omega t] = I_{(2j-1)\omega}$$

   P4. Bestimmen von Koeffizienten $a_{2k}$ und $a_{2j-1}$ durch Anwenden der Bedingungen:

$$\frac{d^n v}{dC^n}(C_0) = 0$$

   für $n = 0, ... k_0 + j_{0-2}$ auf einen Verzerrungsparameter $\upsilon(C)$, definiert als:

$$\upsilon(C) = \frac{\sum_j (-1)^j a_{2j-1} J_{2j-1}(C)}{\sum_k (-1)^{k+1} a_{2k} J_{2k}(C)}$$

   wobei $J_i$ mit *i* als einer ganzen Zahl die Bessel-Funktion erster Art darstellt;
   P5. lineares Kombinieren von $I_{2k\omega}$ und $I_{(2j-1)\omega}$ aus Schritt P3 für alle $k = 1...k_0$ und $j = 1, ...j_0$ mit entsprechenden Koeffizienten $a_{2k}$ und $a_{2j-1}$ aus Schritt P4, um lineare Kombinationen $\sum_j a_{2j-1} I_{(2j-1)\omega}$ und $\sum_k a_{2k} I_{2k\omega}$ zu erhalten;
   P6. Berechnen von $\Delta\varphi(t)$ unter Verwendung der linearen Kombinationen aus Schritt P5 und der folgenden Beziehungen;

$$\sum_j a_{2j-1} I_{(2j-1)\omega} = B S_1(C)\sin(\Delta\varphi)$$

$$\Sigma_k\, a_{2k} I_{2k\omega} = BS_2(C)\cos(\Delta\varphi).$$

wobei $S_1(C) = \Sigma_j[(-1)^j a_{2j-1} J_{2j-1}(C)]$ und $S_2(C) = \Sigma_j[(-1)^{j+1} a_{2j} J_{2j}(C)]$ und $S_1(C) = S_2(C)$.

**2.** Verfahren nach Anspruch 1, wobei $k_0 = 2$ und $j_0 = 2$.

**3.** Verfahren nach Anspruch 1, wobei $k_0 = 1$ und $j_0 = 2$.

**4.** Verfahren zum Demodulieren einer Wellenform $I$, die von einem Interferometer mit zwei Zweigen ausgegeben wird, wobei einer der Zweige mit einer Sinusfunktion moduliert ist, wobei die Wellenform $I = A + B\cos[C_0 \cos(\omega t) + \Delta\varphi(t)]$ ist, wobei $A$ und $B$ Parameter sind, die eine Mischeffizenz des Interferometers betreffen, $C_0$ eine Nenn-Phasenmodulationstiefe des Interferometers ist, $\Delta\varphi(t)$ eine Phasendifferenz zwischen den beiden Zweigen ist, $\omega$ eine Modulationskreisfrequenz des Interferometers ist und $t$ die Zeit ist;
wobei die folgenden Schritte durch eine Schaltung oder Logik ausgeführt werden:

P1. Erfassen der Wellenform $I$ vom Interferometer;
P2. Bestimmen von Koeffizienten $a_{2k}$ und $a_{2j-1}$ für $k = 1...k_0$ und $j = 1, ... j_0$, wobei $k_0$ und $j_0$ vorgegebene ganze Zahlen sind, durch Anwenden der Bedingungen:

$$\frac{d^n v}{dC^n}(C_0) = 0$$

für $n = 0, ... k_0 + j_{0-2}$ auf einen Verzerrungsparameter $v(C)$, definiert als:

$$v(C) = \frac{\Sigma_j(-1)^j a_{2j-1} J_{2j-1}(C)}{\Sigma_k(-1)^{k+1} a_{2k} J_{2k}(C)}$$

wobei $J_i$ mit $i$ als einer ganzen Zahl die Bessel-Funktion erster Art darstellt;
P3. Erzeugen der Funktionen:

$$f_1(t) = \sum_j a_{2j-1}\cos[(2j - 1)\omega t]$$

$$f_2(t) = \sum_k a_{2k}\cos[2k\omega t]$$

P4. Berechnen und Tiefpassfiltern der Produkte $I \otimes f_1$ und $I \otimes f_2$;
P5. Berechnen von $\Delta\varphi(t)$ auf der Grundlage von $I \otimes f_1$ und $I \otimes f_2$ aus Schritt P4 unter Verwendung der folgenden Beziehungen:

$$I \otimes f_1 = BS_1(C)\sin(\Delta\varphi)$$

$$I \otimes f_2 = BS_2(C)\sin(\Delta\varphi)$$

wobei $S_1(C) = \Sigma_j[(-1)^j a_{2j-1} J_{2j-1}(C)]$ und $S_2(C) = \Sigma_j[(-1)^{j+1} a_{2j} J_{2j}(C)]$ und $S_1(C) = S_2(2)$.

**5.** Verfahren nach Anspruch 4, wobei $k_0 = 2$ und $j_0 = 2$ und

$$f_1(t) = a_1 \cos\omega t + a_3 \cos 3\omega t$$

$$f_2(t) = a_2 \cos 2\omega t + a_4 \cos 4\omega t.$$

wobei $a_1$ = 1 und $a_2$, $a_3$, $a_4$ als Lösung des folgenden Gleichungssystems berechnet werden:

$$\begin{pmatrix} J_3(C) & J_2(C) & -J_4(C) \\ J'_3(C) & J'_2(C) & -J'_4(C) \\ J''_3(C) & J''_2(C) & -J''_4(C) \end{pmatrix} \begin{pmatrix} a_3 \\ a_2 \\ a_4 \end{pmatrix} = \begin{pmatrix} J_1(C) \\ J'_1(C) \\ J''_1(C) \end{pmatrix}$$

wobei $J_i$, $J'_i$, $J''_i$ für $i$ = 1...4 die nullte, erste und zweite Ableitung der Bessel-Funktion erster Art darstellen.

**6.** Verfahren nach Anspruch 4, wobei $k_0$ = 1 und $j_0$ = 2 und

$$f_1(t) = \cos \omega t + a_3 \cos 3\omega t,$$

$$f_2(t) = a_2 \cos 2\omega t$$

wobei $a_3$ und $a_2$ als Lösung des folgenden Systems berechnet werden:

$$\begin{pmatrix} J_3(C) & J_2(C) \\ J'_3(C) & J'_2(C) \end{pmatrix} \begin{pmatrix} a_3 \\ a_2 \end{pmatrix} = \begin{pmatrix} J_1(C) \\ J'_1(C) \end{pmatrix}$$

wobei $J_i$, $J'_i$ für $i$ = 1...3 jeweils die nullte und erste Ableitung der Bessel-Funktion erster Art darstellen.

**7.** Verfahren nach einem der Ansprüche 4 bis 6, wobei die Phasendifferenz zwischen den zwei Zweigen $\Delta\varphi$(t) berechnet wird als:

$$\Delta\varphi(t) = arctan \left( \frac{I \ \otimes \ f_1}{I \ \otimes \ f_2} \right)$$

**8.** Verfahren nach einem der Ansprüche 1 bis 7, wobei der Verzerrungsparameter $\upsilon(C)$ aufgrund der Trägerphasenverzögerung $\theta$ einen Korrekturfaktor einschließt:

$$\upsilon(C) \ = \ \frac{\sum_j (-1)^j a_{2j-1} \cos[(2j-1)\theta] J_{2j-1}(C)}{\sum_k (-1)^{k+1} a_{2k} \cos[2k\theta] J_{2k}(C)}$$

**9.** Verfahren nach einem der Ansprüche 1 bis 8, wobei die Schaltung oder Logik digital ist.

**10.** Computerprogramm, das Codemittel umfasst, die beim Laufen auf einem Computer zum Ausführen des Verfahrens nach einem oder mehreren der Ansprüche 1 bis 9 konfiguriert sind.

**11.** Interferometrisches Messsystem, umfassend:

- ein Interferometer mit zwei Zweigen, wobei mindestens einer der Zweige mit einer Sinusfunktion moduliert ist, wobei das Interferometer eine Wellenform $I$ ausgibt und mit
- einer Schaltung oder Logik verbunden ist;

wobei die Wellenform $I$ durch die Schaltung oder Logik erfasst wird und wobei die Schaltung oder Logik zum Ausführen der Schritte des Verfahrens gemäß Anspruch 1 bis 9 konfiguriert ist.

**12.** Interferometrisches Messsystem nach Anspruch 11, wobei die Schaltung oder Logik ein Computer ist, auf dem das Computerprogramm nach Anspruch 10 installiert ist.

**Revendications**

1. Procédé de démodulation d'une forme d'onde $I$ sortant d'un interféromètre à deux branches, au moins l'une des branches étant modulée avec une fonction sinusoïdale, la forme d'onde étant $I = A + B\cos[C_0 \cos(\omega t) + \Delta\varphi(t)]$, dans laquelle $A$ et $B$ sont des paramètres liés à une efficacité de mélange de l'interféromètre, $C_0$ est une profondeur de modulation de phase nominale de l'interféromètre, $\Delta\varphi(t)$ est un déphasage entre les deux branches, $\omega$ est une fréquence angulaire de modulation de l'interféromètre et $t$ le temps ;
dans lequel les étapes suivantes sont exécutées par un ensemble de circuits ou une logique :

   P1. acquisition de ladite forme d'onde $I$ de l'interféromètre ;
   P2. génération de fonctions $\cos[2k\omega t]$ et $\cos[(2j\text{-}1)\,\omega t]$ pour $k = 1...k_0$, et $j = 1,... j_0$, $k_0$ et $j_0$ étant des nombres entiers prédéterminés ;
   P3. calcul et filtrage passe-bas des produits, pour chaque $k = 1...k_0$ et $j = 1,... j_0$ :

$$I \otimes \cos[2k\omega t] = I_{2k\omega}$$

$$I \otimes \cos[(2j\text{-}1)\omega t] = I_{(2j\text{-}1)\omega}$$

   P4. détermination des coefficients $a_{2k}$ et $a_{2j\text{-}1}$ en imposant les conditions :

$$\frac{d^n v}{dC^n}(C_0) = 0$$

   pour $n = 0,... k_0 + j_0\text{-}2$ sur un paramètre de distorsion v(C) défini par :

$$v(C) = \frac{\sum_j (-1)^j a_{2j-1} J_{2j-1}(C)}{\sum_k (-1)^{k+1} a_{2k} J_{2k}(C)}$$

   où $J_i$, avec $i$ étant un nombre entier, représente la fonction de Bessel de première espèce ;
   P5. combinaison linéaire $I_{2k\omega}$ et $I_{(2j\text{-}1)\omega}$ de l'étape P3 pour chaque $k = 1... k_0$ et $j = 1,... j_0$ avec les coefficients respectifs $a_{2k}$ et $a_{2j\text{-}1}$ de l'étape P4, obtention de combinaisons linéaires $\Sigma_j\, a_{2j\text{-}1}I_{(2j\text{-}1)\omega}$ et $\Sigma_k\, a_{2k}I_{2k\omega}$ ;
   P6. calculer $\Delta\varphi(t)$ à l'aide des combinaisons linéaires de l'étape P5 et des relations suivantes ;

$$\Sigma_j\, a_{2j\text{-}1}I_{(2j\text{-}1)\omega} = BS_1(C)\sin(\Delta\varphi)$$

$$\Sigma_k\, a_{2k}I_{2k\omega} = BS_2(C)\cos(\Delta\varphi).$$

   où $S_1(C) = \Sigma_j[(-1)^j a_{2j-1}J_{2j-1}(C)]$ et $S_2(C) = \Sigma_j[(-1)^{j+1}a_{2j}J_{2j}(C)]$, et $S_1(C) = S_2(C)$.

2. Procédé selon la revendication 1, dans lequel $k_0 = 2$ et $j_0 = 2$.

3. Procédé selon la revendication 1, dans lequel $k_0 = 1$ et $j_0 = 2$.

4. Procédé de démodulation d'une forme d'onde $I$ sortant d'un interféromètre à deux branches, l'une des branches étant modulée avec une fonction sinusoïdale, la forme d'onde étant $I = A + B\cos[C_0 \cos(\omega t) + \Delta\varphi(t)]$, dans laquelle $A$ et $B$ sont des paramètres liés à une efficacité de mélange de l'interféromètre, $C_0$ est une profondeur de modulation de phase nominale de l'interféromètre, $\Delta\varphi(t)$ est un déphasage entre les deux branches, $\omega$ est une fréquence angulaire de modulation de l'interféromètre et $t$ le temps ;
dans lequel les étapes suivantes sont exécutées par un ensemble de circuits ou une logique :

P1. acquisition de ladite forme d'onde $I$ de l'interféromètre ;

P2. détermination des coefficients $a_{2k}$ et $a_{2j-1}$ pour $k = 1...k_0$, et $j = 1,... j_0$, $k_0$ et $j_0$ étant des nombres entiers prédéterminés, en imposant les conditions :

$$\frac{d^n v}{dC^n}(C_0) \;=\; 0$$

pour $n = 0,... k_0 + j_0$-2 sur un paramètre de distorsion $v(C)$ défini par :

$$v(C) = \frac{\sum_j (-1)^j a_{2j-1} J_{2j-1}(C)}{\sum_k (-1)^{k+1} a_{2k} J_{2k}(C)}$$

où $J_i$, avec $i$ étant un nombre entier, représente la fonction de Bessel de première espèce ;

P3. génération des fonctions :

$$f_1(t) = \sum_j a_{2j-1}\cos[(2j-1)\omega t]$$

$$f_2(t) = \sum_k a_{2k}\cos[2k\omega t]$$

P4. calcul et filtrage passe-bas des produits $I \otimes F_1$ et $I \otimes F_2$ ;

P5. calcul de $\Delta\varphi(t)$ sur la base de $I \otimes f_1$ et $I \otimes f_2$ de l'étape P4 en utilisant les relations suivantes :

$$I \otimes f_1 = BS_1(C)\sin(\Delta\varphi)$$

$$I \otimes f_2 = BS_2(C)\sin(\Delta\varphi)$$

où $S_1(C) = \Sigma_j[(-1)^j a_{2j-1} J_{2j-1}(C)]$ et $S_2(C) = \Sigma_j[(-1)^{j+1} a_{2j} J_{2j}(C)]$, et $S_1(C) = S_2(2)$.

5. Procédé selon la revendication 4, dans lequel $k_0 = 2$ et $j_0 = 2$, et

$$f_1(t) = a_1\cos\omega t + a_3\cos 3\omega t$$

$$f_2(t) = a_2\cos 2\omega t + a_4\cos 4\omega t.$$

où $a_1 = 1$ et $a_2$, $a_3$, $a_4$ sont calculés comme une solution du système d'équations suivant :

$$\begin{pmatrix} J_3(C) & J_2(C) & -J_4(C) \\ J'_3(C) & J'_2(C) & -J'_4(C) \\ J''_3(C) & J''_2(C) & -J''_4(C) \end{pmatrix}\begin{pmatrix} a_3 \\ a_2 \\ a_4 \end{pmatrix} = \begin{pmatrix} J_1(C) \\ J'_1(C) \\ J''_1(C) \end{pmatrix}$$

où $J_i$, $J'_i$, $J''_i$ pour $i = 1...4$ représentent les dérivées zéro, première et seconde de la fonction de Bessel de première espèce.

6. Procédé selon la revendication 4, dans lequel $k_0 = 1$ et $j_0 = 2$ et

$$f_1(t) = \cos \omega t + a_3 \cos 3\omega t,$$

$$f_2(t) = a_2 \cos 2\omega t$$

où $a_3$ et $a_2$ sont calculés comme une solution du système suivant :

$$\begin{pmatrix} J_3(C) & J_2(C) \\ J_3'(C) & J_2'(C) \end{pmatrix} \begin{pmatrix} a_3 \\ a_2 \end{pmatrix} = \begin{pmatrix} J_1(C) \\ J_1'(C) \end{pmatrix}$$

où $J_i$, $J_i'$ pour $i = 1...3$ représentent respectivement les dérivées zéro et première de la fonction de Bessel de première espèce.

**7.** Procédé selon l'une quelconque des revendications 4 à 6, dans lequel le déphasage entre les deux branches $\Delta\varphi(t)$ est calculé comme suit :

$$\Delta\varphi(t) = arctan\left(\frac{I \otimes f_1}{I \otimes f_2}\right)$$

**8.** Procédé selon l'une quelconque des revendications 1 à 7, dans lequel le paramètre de distorsion $\upsilon(C)$ inclut un facteur de correction dû au retard de phase de la porteuse $\theta$ :

$$v(C) = \frac{\sum_j (-1)^j a_{2j-1} \cos[(2j-1)\theta] J_{2j-1}(C)}{\sum_k (-1)^{k+1} a_{2k} \cos[2k\theta] J_{2k}(C)}$$

**9.** Procédé selon l'une quelconque des revendications 1 à 8, dans lequel l'ensemble de circuits ou la logique est numérique.

**10.** Programme informatique, comprenant des moyens de code configurés pour exécuter, lors de leur exécution sur un ordinateur, le procédé selon une ou plusieurs revendications 1 à 9.

**11.** Système de mesure interférométrique, comprenant :

- un interféromètre à deux branches, au moins une des branches étant modulée avec une fonction sinusoïdale, l'interféromètre délivrant une forme d'onde $I$ et étant connecté à
- un ensemble de circuits ou une logique ;

dans lequel la forme d'onde $I$ est acquise par l'ensemble de circuits ou la logique, et dans lequel l'ensemble de circuits ou la logique est configuré pour exécuter les étapes du procédé selon les revendications 1 à 9.

**12.** Système de mesure interférométrique selon la revendication 11, dans lequel l'ensemble de circuits ou la logique est un ordinateur sur lequel le programme informatique de la revendication 10 est installé.

**Fig. 1**

**Fig. 2**

FIG. 3

(a) PGC standard    (b) MTM (up to 3ω)    (c) MTM (up to 4ω)

EP 4 193 120 B1

FIG. 4

FIG. 6

EP 4 193 120 B1

FIG. 5

FIG. 7

**(a)**          **(b)**          **(c)**

**(d)**          **(e)**

FIG. 8

EP 4 193 120 B1

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI SHUWANG.** *An ameliorated phase-generated-carrier demodulation algorithm for sinusoidal phase-modulating fiber-optic interferometer*
- **M. D. TODD ; G. A. JOHNSON ; C. C. CHANG.** Passive, light intensity-independent interferometric method for fibre Bragg grating interrogation. *Electronics Letters,* 1999, vol. 35 (22), 1970-1971
- **A. D. KERSEY ; T. A. BERKOFF ; W. W. MOREY.** High-resolution fibre-grating based strain sensor with interferometric wavelength-shift detection. *Electronics Letters,* 1992, vol. 28, 236-238
- **D. A. JACKSON ; A. D. KERSEY ; M. CORKE ; J. D. C. JONES.** Pseudoheterodyne detection scheme for optical interferometers. *Electronics Letters,* 1982, vol. 18, 1081-1083
- **M. SONG ; S. YIN ; P. B. RUFFIN.** Fiber Bragg grating strain sensor demodulation with quadrature sampling of a Mach-Zehnder interferometer. *Applied Optics,* 2000, vol. 39, 1106
- **A. DANDRIDGE ; A. B. TVETEN ; T. G. GIALLORENZI.** Homodyne Demodulation Scheme for Fiber Optic Sensors Using Phase Generated Carrier. *IEEE Journal of Quantum Electronics,* 1982, vol. 18, 1647-1653
- **L. WANG ; M. ZHANG ; X. MAO ; Y. LIAO.** The arctangent approach of digital PGC demodulation for optic interferometric sensors. *Interferometry XIII: Techniques and Analysis,* 2006
- **J. HE ; L. WANG ; F. LI ; Y. LIU.** An Ameliorated Phase Generated Carrier Demodulation Algorithm With Low Harmonic Distortion and High Stability. *Journal of Lightwave Technology,* 2010, vol. 28 (22), 3258-3265
- **A. ZHANG ; S. ZHANG.** High Stability Fiber-Optics Sensors with an Improved PGC Demodulation Algorithm. *IEEE Sensors Journal,* 2016, vol. 16, 7681-7684
- **G. Q. WANG ; T. W. XU ; F. LI.** PGC demodulation technique with high stability and low harmonic distortion. *IEEE Photonics Technology Letters,* 2012, vol. 24, 2093-2096
- **S. ZHANG ; Y. CHEN ; B. CHEN ; L. YAN ; J. XIE ; Y. LOU.** A PGC-DCDM demodulation scheme insensitive to phase modulation depth and carrier phase delay in an EOM-based SPM interferometer. *Optics Communications,* 2020, 126183

- **H. A. DEFERRARI ; R. A. DARBY ; F. A. ANDREWS.** Vibrational Displacement and Mode-Shape Measurement by a Laser Interferometer. *The Journal of the Acoustical Society of America,* 1967, vol. 42, 982-990
- **O. SASAKI ; H. OKAZAKI.** Sinusoidal phase modulating interferometry for surface profile measurement. *Applied Optics,* 1986, vol. 25 (18), 3137
- **Y. TONG ; H. ZENG ; L. LI ; Y. ZHOU.** Improved phase generated carrier demodulation algorithm for eliminating light intensity disturbance and phase modulation amplitude variation. *Applied Optics,* 2012, vol. 51, 6962-6967
- **V. S. SUDARSHANAM ; K. SRINIVASAN.** Linear readout of dynamic phase change in a fiber-optic homodyne interferometer. *Optics Letters,* 1989, vol. 14, 140
- **A. V. VOLKOV ; M. Y. PLOTNIKOV ; M. V. MEKHRENGIN ; G. P. MIROSHNICHENKO ; A. S. ALEYNIK.** Phase Modulation Depth Evaluation and Correction Technique for the PGC Demodulation Scheme in Fiber-Optic Interferometric Sensors. *IEEE Sensors Journal,* 2017, vol. 17, 4143-4150
- **Z. QU ; S. GUO ; C. HOU ; J. YANG ; L. YUAN.** Real-time self-calibration PGC-Arctan demodulation algorithm in fiber-optic interferometric sensors. *Optics Express,* 2019, vol. 27, 23593
- **S. ZHANG ; B. Y. L. CHEN ; Z. XU.** Real-time normalization and nonlinearity evaluation methods of the PGC-arctan demodulation in an EOM-based sinusoidal phase modulating interferometer. *Optics Express,* 2018, vol. 26 (2), 605-616
- **J. XIE ; L. YAN ; B. CHEN ; Y. LOU.** Extraction of Carrier Phase Delay for Nonlinear Errors Compensation of PGC Demodulation in an SPM Interferometer. *Journal of Lightwave Technology,* 2019, vol. 37, 3422-3430
- **M. ABRAMOWITZ ; I. A. STEGUN.** Handbook of Mathematical Functions, With Formulas, Graphs, and Mathematical Tables, USA. Dover Publications, Inc, 1972, 361
- **D. SHMILOVITZ.** On the definition of total harmonic distortion and its effect on measurement interpretation. *IEEE Transactions on Power Delivery,* 2005, vol. 20 (1), 526-528

- **P. M. LAVRADOR ; N. B. D. CARVALHO ; J. C. PEDRO.** Noise and distortion figure - an extension of noise figure definition for nonlinear devices. *IEEE MTT-S International Microwave Symposium,* 2003
- **Y. E. MARIN ; A. CELIK ; S. FARALLI ; L. ADELMINI ; C. KOPP ; F. D. PASQUALE ; C. OTON.** Integrated Dynamic Wavelength Division Multiplexed FBG Sensor Interrogator on a Silicon Photonic Chip. *Journal of Lightwave Technology,* 2019, vol. 37 (18), 4770-4775

- **T. R. CHRISTIAN ; P. A. FRANK ; B. H. HOUSTON.** Real-time analog and digital demodulator for interferometric fiber optic sensors. *Smart Structures and Materials 1994: Smart Sensing, Processing, and Instrumentation,* 1994, vol. 2191
- **Y. E. MARIN.** Silicon Photonic Biochemical Sensor on Chip Based on Interferometry and Phase-Generated-Carrier Demodulation. *IEEE J. Sel. Top. Quant.,* 2019, vol. 25 (1), 1-9